# EUROPÄISCHE PATENTSCHRIFT

(11) **EP 3 074 653 B1**
(45) Veröffentlichungstag und Bekanntmachung des Hinweises auf die Patenterteilung: **06.01.2021**
(21) Anmeldenummer: 14805476.0
(22) Anmeldetag: 22.10.2014
(51) Int. Cl.: F16D 13/75

(54) **KUPPLUNGSVORRICHTUNG**
CLUTCH DEVICE
SYSTÈME D'EMBRAYAGE

(30) Priorität: 28.11.2013 DE 102013224328
(43) Veröffentlichungstag der Anmeldung: 05.10.2016
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2014/200580
(87) Internationale Veröffentlichungsnummer: WO 2015/078458

(56) Entgegenhaltungen:
- DE-A1- 19 922 724
- DE-A1-102008 037 796
- DE-A1-102010 006 054
- DE-A1-102012 204 245
- DE-T5-112011 102 760

## Beschreibung

Die vorliegende Erfindung betrifft eine Kupplungsvorrichtung, insbesondere eine Einzel- oder Doppelkupplung, insbesondere für ein Kraftfahrzeug.

Aus der DE 10 2009 035 225 A1 ist eine Kupplungsvorrichtung mit einer Gegendruckplatte, einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte, und einer Verschleißnachstelleinrichtung zum Ausgleich von Verschleiß der Kupplungsscheibe bekannt. Die Verschleißnachstelleinrichtung beinhaltet einen drehbaren Verstellring und einen auf den Verstellring wirkenden, drehbar gelagerten Spindeltrieb mit einem eine Zahnstruktur aufweisenden Antriebsritzel. Eine mit der Zahnstruktur des Antriebsritzels in Eingriff bringbare Antriebsklinke verdreht im Verschleißfall den Spindeltrieb, wodurch der mit dem Spindeltrieb in Wirkverbindung befindliche Verstellring verdreht wird, um den Verschleiß der Kupplungsscheibe auszugleichen.

Da die Verdrehung des Antriebsritzels im Verschleißfall abhängig vom sensierten Verschleißweg, das heißt abhängig vom sensierten Zusatzweg, um den sich die Anpressplatte näher an die Gegendruckplatte heranbewegen muss, um die dünner gewordene Kupplungsscheibe reibschlüssig zwischen der Anpressplatte und der Gegendruckplatte zu klemmen, ist, bezeichnet man die zuvor erläuterte Verschleißnachstelleinrichtung auch als wegbasierte Verschleißnachstelleinrichtung.

Andere Kupplungen sind aus DE 10 2012 204 245, DE 11 2011 102 760 T5 und DE 10 2010 006 054 A1 bekannt.

Es ist Aufgabe der vorliegenden Erfindung, eine Kupplungsvorrichtung mit einer, insbesondere kraftbasierten, Verschleißnachstelleinrichtung anzugeben, bei der nicht die Ausrückkraft, sondern die Anpresskraft sensiert werden kann und als Parameter für die Verschleißnachstellung genutzt werden kann.

Erfindungsgemäß gelöst wird diese Aufgabe durch eine Kupplungsvorrichtung gemäß Patentanspruch 1 mit zumindest einer Gegendruckplatte, einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte, und einer Verschleißnachstelleinrichtung zum Ausgleich von Verschleiß der Kupplungsscheibe, wobei die Verschleißnachstelleinrichtung zumindest einen drehbaren und in axialer Richtung klemmbaren Vortriebsring und zumindest einen drehbaren und in axialer Richtung klemmbaren Rampenring aufweist, der mittels einer drehmomentübertragenden, in Umfangsrichtung der Kupplungsvorrichtung einen begrenzten Relativweg zulassenden Anbindung an den Vortriebsring angebunden ist, wobei die Steifigkeit der Anbindung in Umfangsrichtung richtungsabhängig ist.

Durch die Anbindung, deren Steifigkeit in Umfangsrichtung richtungsabhängig ist, das heißt bei einer Bewegung im Uhrzeigersinn eine andere Steifigkeit aufweist als bei einer Bewegung gegen den Uhrzeigersinn, ist für die Verschleißnachstelleinrichtung keine zusätzliche Federenergie zur Verschleißnachstellung notwendig. Ähnlich wie bei der zuvor beschriebenen wegbasierten Verschleißnachstelleinrichtung kann die Energie zur Verschleißnachstellung aus dem Weg der Anpressplatte, insbesondere aus der Energie der Blattfedern, die die Anpressplatte in Ausrückrichtung vorspannen, bezogen werden. Wenn der Verschleiß der Kupplungsscheibe sensiert worden ist, sind somit keine zusätzlichen Energiequellen, beispielsweise ein in Umfangsrichtung gegenüber der Anpressplatte oder dem Kupplungsgehäuse federnd vorgespannter Verstellring, erforderlich, um den Kupplungsverschleiß nachzustellen. Insbesondere ist die Kupplungsvorrichtung als Einzel- oder Doppelkupplung, vorzugsweise für ein Kraftfahrzeug, ausgebildet.

Bevorzugte Ausführungsbeispiele der vorliegenden Erfindung sind in den abhängigen Ansprüchen dargelegt.

Vorzugsweise mittels in Umfangsrichtung verteilt angeordneter Blattfedern ist die Anpressplatte drehfest in einem Kupplungsgehäuse der Kupplungsvorrichtung angeordnet und bezüglich der Gegendruckplatte in axialer Richtung begrenzt verlagerbar, während die Gegendruckplatte gehäusefest angeordnet ist. Wenn die Kupplungsscheibe im eingerückten Zustand der Kupplungsvorrichtung zwischen der Anpressplatte und der Gegendruckplatte verspannt ist, erfolgt eine reibschlüssige Übertragung des Drehmoments von der Eingangsseite der Kupplungsvorrichtung, über die Anpressplatte und die Gegendruckplatte auf die Kupplungsscheibe, und von der Kupplungsscheibe auf die Ausgangsseite der Kupplungsvorrichtung, beispielsweise auf die Eingangswelle eines Getriebes.

Durch ein Hebelelement, auf das eine Aktoreinrichtung wirkt, kann die Kupplungsvorrichtung eingerückt bzw. ausgerückt werden. Beim Hebelelement kann es sich um eine Tellerfeder, wie sie üblicherweise bei normal-eingerückten Kupplungsvorrichtungen zum Einsatz kommt, oder um eine Hebelfeder, wie sie üblicherweise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft der ausrückenden Blattfedern, die auf die Anpressplatte wirken. Bei der Betätigung wird die Tellerfeder durch die Aktoreinrichtung mit einer Kraft beaufschlagt, durch die die Kupplung ausgerückt wird. Andererseits kann die Kupplungsvorrichtung aber auch als normal-ausgerückte Kupplungsvorrichtung ausgebildet sein, das heißt als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Kupplung eingerückt wird.

Die Kupplungsvorrichtung kann gleichermaßen als gedrückte Kupplungsvorrichtung, das heißt als Kupplungsvorrichtung, bei der die Aktoreinrichtung eine drückende Kraft auf die Tellerfeder bzw. die Hebelfeder ausübt, oder als gezogene Kupplungsvorrichtung, das heißt als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als trockene Kupplung und andererseits als Nasskupplung ausgebildet sein.

Darüber hinaus kann die Kupplungsvorrichtung als Einzelkupplung ausgebildet sein, das heißt eine einzige Drehmomentübertragungseinrichtung mit einer Anpressplatte, einer Gegendruckplatte und einer dazwischen klemmbaren Kupplungsscheibe aufweisen, kann jedoch auch als Mehrfachkupplung, insbesondere als Doppelkupplung, ausgebildet sein. Die Doppelkupplung kann zwei separate Drehmomentübertragungseinrichtungen aufweisen, kann jedoch auch zwei Drehmomentübertragungseinrichtungen aufweisen, die sich eine gemeinsame Gegendruckplatte, die in diesem Zusammenhang auch als Zentralplatte bezeichnet wird, teilen.

Der Rampenring der Verschleißnachstelleinrichtung ist drehbar um eine Drehachse der Kupplungsvorrichtung gelagert und in axialer Richtung der Kupplungsvorrichtung zwischen der Anpressplatte und dem Hebelelement, insbesondere einem Kraftrand der Tellerfeder oder der Hebelfeder, klemmbar gelagert. Auf seiner dem Hebelelement abgewandten Oberfläche weist der Rampenring Rampen auf, die gleitbeweglich auf Gegenrampen angeordnet sind, so dass bei einer relativen Verdrehung des Rampenrings die Rampen des Rampenrings an den Gegenrampen entlanggleiten, wodurch sich der Abstand zwischen der Anpressplatte und der der Anpressplatte abgewandten Oberfläche des Rampenrings, mit der der Rampenring in Anlage am Hebelelement ist, verändert. Vorzugsweise sind die Gegenrampen einteilig mit der Anpressplatte ausgebildet, und sind insbesondere in die Anpressplatte eingelassen.

Vorzugsweise in radialer Richtung innerhalb des Rampenrings ist der Vortriebsring angeordnet, der mittels zumindest einer drehmomentübertragenden, in Umfangsrichtung der Kupplungsvorrichtung einen begrenzten Relativweg zulassenden Anbindung an dem Rampenring angebunden ist. Im Gegensatz zum Rampenring weist der Vortriebsring keine Rampen auf, sondern liegt im Wesentlichen plan auf der der Kupplungsscheibe abgewandten Oberfläche der Anpressplatte an der Anpressplatte an. Auf seiner anderen Seite liegt der Vortriebsring an der der Anpressplatte bzw. der Kupplungsscheibe zugewandten Oberfläche des Hebelelements im Wesentlichen plan an.

Vorzugsweise weist die Verschleißnachstelleinrichtung eine Sensorfeder auf, die ausgebildet ist, den Vortriebsring im verschleißfreien und/oder verschleißnachgestellten Zustand der Kupplungsvorrichtung in axialer Richtung zu klemmen, wenn die Kupplungsvorrichtung eingerückt ist. Hierzu liegt die Sensorfeder vorzugsweise auf demselben Radius wie der Vortriebsring, jedoch auf der in axialer Richtung gegenüberliegenden Seite, das heißt vorzugsweise auf der der Anpressplatte bzw. der Kupplungsscheibe abgewandten Oberfläche des Hebelelements, am Hebelelement an. Diese Anlage kann unmittelbar sein, kann jedoch auch mittelbar, beispielsweise mittels eines zwischen Sensorfeder und Hebelelement angeordneten Kraftrings erfolgen. Darüber hinaus ist die Sensorfeder zwischen der Innenseite des Kupplungsgehäuses und dem Hebelelement geklemmt und vorgespannt.

Gemäß einem weiteren bevorzugten Ausführungsbeispiel ist das Hebelelement ausgebildet, bei eingerückter Kupplungsvorrichtung den Rampenring in axialer Richtung zwischen Hebelelement und der Anpressplatte zu klemmen. Weiterhin vorzugsweise ist die Sensorfeder ausgebildet, das Hebelelement im verschleißfreien und/oder verschleißnachgestellten Zustand der Kupplungsvorrichtung gegen den Vortriebsring zu drücken, um den Vortriebsring in axialer Richtung zu klemmen, wenn die Kupplungsvorrichtung eingerückt ist.

Gemäß einem weiteren bevorzugten Ausführungsbeispiel ist das Hebelelement ausgebildet, die Sensorfeder im verschleißbehafteten Zustand der Kupplungsvorrichtung durchzudrücken, und die Klemmung des Vortriebsrings in axialer Richtung aufzuheben, wenn die Kupplungsvorrichtung eingerückt ist. Hierdurch ist eine Sensierung des Kupplungsverschleißes im eingerückten Zustand der Kupplungsvorrichtung möglich.

Vorzugsweise weist die Anbindung eine Beulfeder auf, die sich in Umfangsrichtung erstreckt, und deren Steifigkeit vorzugsweise in Druckrichtung geringer als in Zugrichtung ist. Insbesondere ist es von Vorteil, wenn die Anbindung mehrere, in Umfangsrichtung verteilt angeordnete Beulfedern aufweist. Weiterhin ist es von Vorteil, wenn die Beulfeder bzw. die Beulfedern bogenförmig ausgebildet ist bzw. sind. Eine Verformung der Beulfeder bzw. der Beulfedern erfolgt insbesondere in axialer Richtung der Kupplungsvorrichtung, wenn die Beulfeder bzw. die Beulfedern in Druckrichtung beaufschlagt wird bzw. werden.

Gemäß einem weiteren bevorzugten Ausführungsbeispiel ist die Beulfeder an ihrem einen Ende an einem der beiden Ringe, vorzugsweise am Vortriebsring, befestigt. Weiterhin ist es von Vorteil, wenn die Beulfeder an ihrem anderen Ende an einem Schiebeelement befestigt ist, das am anderen der beiden Ringe, vorzugsweise am Rampenring, befestigt ist. Befestigungen können kraftschlüssig, formschlüssig oder auch stoffschlüssig erfolgen.

Insbesondere ist es von Vorteil, wenn das Schiebeelement in Umfangsrichtung gleitbeweglich und sowohl in axialer Richtung als auch in radialer Richtung der Kupplungsvorrichtung verkippbar an dem einen der beiden Ringe, vorzugsweise am Vortriebsring, gelagert ist. Hierdurch ist insbesondere in Druckrichtung eine definierte Führung des Schiebeelements und der gesamten Beulfeder möglich, wodurch insbesondere in Druckrichtung der Beulfeder ein definiertes Ausbeulen der Beulfeder in axialer Richtung der Kupplungsvorrichtung ermöglicht wird.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einer Verschleißnachstelleinrichtung, die einen Vortriebsring und einen mittels Beulfedern angebundenen Rampenring aufweist, in einer Schnittansicht,
- Figur 2: eine perspektivische Ansicht der Kupplungsvorrichtung aus Figur 1 mit teilweise freigeschnittener Verschleißnachstelleinrichtung in Blickrichtung von der Aktoreinrichtung,
- Figur 3: eine perspektivische Ansicht der Kupplungsvorrichtung aus Figur 1 mit teilweise freigeschnittener Verschleißnachstelleinrichtung in Blickrichtung von der Kupplungsscheibe,
- Figur 4: eine Schnittansicht der Kupplungsvorrichtung aus den Figuren 1 bis 3 im eingerückten, nicht verschlissenen Zustand,
- Figur 5: eine Schnittansicht der Kupplungsvorrichtung aus den Figuren 1 bis 3 im ausgerückten, nicht verschlissenen Zustand,
- Figur 6: eine Schnittansicht der Kupplungsvorrichtung aus den Figuren 1 bis 3 im eingerückten, verschlissenen Zustand,
- Figur 7: eine Detailansicht der Verschleißnachstelleinrichtung der Kupplungsvorrichtung aus den Figuren 1 bis 3, und
- Figur 8: eine Detailansicht der Verschleißnachstelleinrichtung der Kupplungsvorrichtung aus den Figuren 1 bis 3 mit ausgebeulter Beulfeder.

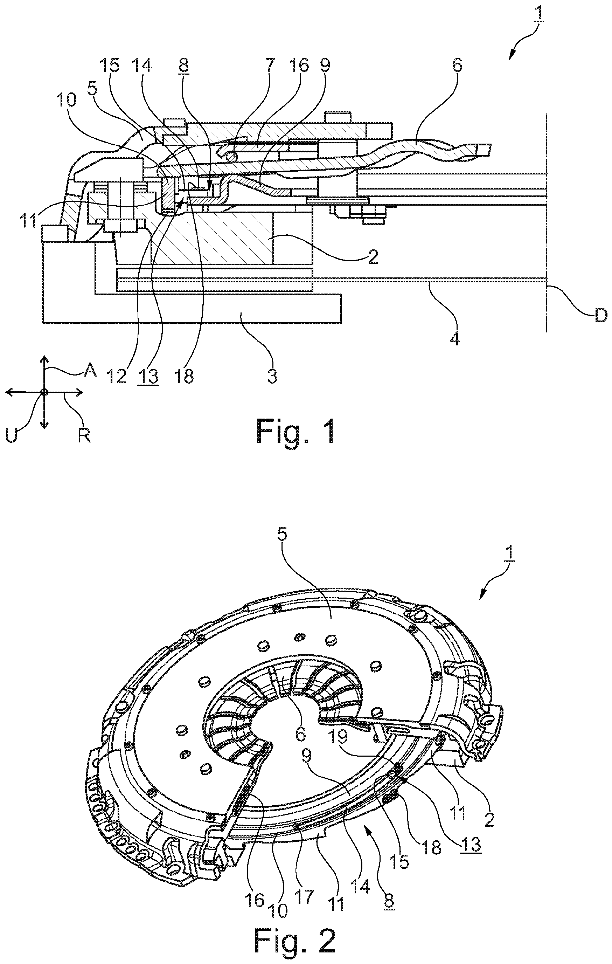

Die Figuren 1 bis 8 betreffen ein bevorzugtes Ausführungsbeispiel einer Kupplungsvorrichtung 1 mit einer Verschleißnachstelleinrichtung 8 für ein Kraftfahrzeug. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 und der Verschleißnachstelleinrichtung 8, die Teilkombinationen der im Folgenden zu erläuternden Merkmale aufweisen.

Die in den Figuren 1 bis 3 dargestellte Kupplungsvorrichtung 1 ist drehbar um eine Drehachse D gelagert und weist zumindest eine Anpressplatte 2, zumindest eine Gegendruckplatte 3 und zumindest eine in axialer Richtung A der Kupplungsvorrichtung 1 zwischen der Anpressplatte 2 und der Gegendruckplatte 3 angeordnete Kupplungsscheibe 4 auf. Die Gegendruckplatte 3 ist mit einem Kupplungsgehäuse 5 fest verbunden, insbesondere verschraubt. Die Anpressplatte 2 ist im Kupplungsgehäuse 5 drehfest gelagert und in axialer Richtung A der Kupplungsvorrichtung 1 begrenzt verlagerbar. Insbesondere ist die Anpressplatte 2 mittels mehrerer nicht dargestellter Blattfedern drehfest im Kupplungsgehäuse 5 befestigt und von der Gegendruckplatte 3 weg, das heißt mit Bezug auf Figur 1 nach oben, vorgespannt.

Darüber hinaus weist die Kupplungsvorrichtung 1 ein Hebelelement 6 auf, das für eine normal-eingerückte, in den Figuren 1 bis 3 dargestellte Kupplungsvorrichtung 1 als Tellerfeder und für eine normal-ausgerückte Kupplungsvorrichtung 1 als Hebelfeder ausgebildet sein. Das Hebelelement 6 ist gehäuseseitig abgestützt und durch eine Aktoreinrichtung betätigbar. Die gehäuseseitige Abstützung kann beispielsweise durch eine am Kupplungsgehäuse 5 befestigte Schwenklagerung 7 erfolgen, durch die das Hebelelement 6 verkippbar aufgehängt ist. Alternativ oder zusätzlich ist es möglich, dass Teile der nachfolgend zu erläuternden Verschleißnachstelleinrichtung 8, beispielsweise ein Vortriebsring 9 und/oder eine Sensorfeder 16 die Schwenklagerung 7 bilden. Über Hebelspitzen, die in radialer Richtung R der Kupplungsvorrichtung 1 auf der Innenseite des vorzugsweise im Wesentlichen ringförmig ausgebildeten Hebelelements 6 angeordnet sind, ist das Hebelelement 6 durch die Aktoreinrichtung betätigbar.

In seinem radialen Außenbereich weist das Hebelelement 6 einen Kraftrand auf. Über einen Rampenring 10, der der Verschleißnachstelleinrichtung 8 zuzuordnen ist, wirkt das Hebelelement 6 mittelbar auf die Anpressplatte 2, indem der Kraftrand des Hebelelements 6 an einer hebelelementseitigen, der Anpressplatte 2 abgewandten Oberfläche des Rampenrings 10 anliegt und im eingerückten Zustand der Kupplungsvorrichtung 1 Druck auf den Rampenring 10 und, mittels des Rampenrings 10, auf die Anpressplatte 2 ausübt.

Bei der normal-eingerückten, in den Figuren 1 bis 3 dargestellten Kupplungsvorrichtung 1, überwiegt die wirksame Kraft des als Tellerfeder ausgebildeten Hebelelements 6 die Gegenkraft der Blattfedern, während bei einer normal-ausgerückten Kupplungsvorrichtung 1 die Gegenkraft der Blattfedern die wirksame Kraft des als Hebelfeder ausgebildeten Hebelelements 6 überwiegt. Dementsprechend führt eine Betätigung der Tellerfeder der normal-eingerückten Kupplungsvorrichtung 1 zum Ausrücken der Kupplungsvorrichtung 1 durch Verkippen bzw. Umschnappen der Tellerfeder, das heißt zum Abhub der Anpressplatte 2 und zur Entfernung der Anpressplatte 2 von der Gegendruckplatte 3, während eine Betätigung der Hebelfeder bei einer normal-ausgerückten Kupplungsvorrichtung 1 zum Einrücken der Kupplungsvorrichtung 1 durch Verkippen der Hebelfeder führt.

Bei eingerückter Kupplungsvorrichtung 1 wird ein Drehmoment von der Eingangsseite der Kupplungsvorrichtung 1, beispielsweise von einem Zweimassenschwungrad, über das Kupplungsgehäuse 5 und sowohl die Gegendruckplatte 3, als auch die Anpressplatte 2, die beide mit dem Kupplungsgehäuse 5 drehfest verbunden sind, reibschlüssig auf die Kupplungsscheibe 4 übertragen. Von der Kupplungsscheibe 4, die reibschlüssig zwischen der Gegendruckplatte 3 und der Anpressplatte 2 geklemmt ist, wird das Drehmoment zur Ausgangsseite der Kupplungsvorrichtung 1 übertragen, beispielsweise auf eine Eingangswelle eines Getriebes.

Da aufgrund des Reibschlusses sowohl die Reibbeläge der Kupplungsscheibe 4, als auch in geringerem Maße die Reibflächen der Gegendruckplatte 3 und der Anpressplatte 2 einem Verschleiß unterworfen sind, muss über die Lebensdauer der Kupplungsvorrichtung 1 die Anpressplatte 2 immer näher an die Gegendruckplatte 3 heranbewegt werden, um die Abnahme der Dicke der Reibbeläge und der Stärke der Reibflächen in axialer Richtung A zu kompensieren und den Reibschluss herstellen bzw. die Kupplungsvorrichtung 1 einrücken zu können. Hierzu ist in der Kupplungsvorrichtung 1 die bereits zuvor erwähnte Verschleißnachstelleinrichtung 8 ausgebildet.

Zusätzlich zum Rampenring 10, durch den der Kupplungsverschleiß nachgestellt werden kann, weist die Verschleißnachstelleinrichtung 8 den Vortriebsring 9 auf, durch den der Kupplungsverschleiß sensiert werden kann. Der Vortriebsring 9 ist vorzugsweise in radialer Richtung R innerhalb des Rampenrings 10 angeordnet. Der Vortriebsring 9 ist um die Drehachse D drehbar angeordnet und in axialer Richtung A klemmbar. Gleichermaßen ist der Rampenring 10 um die Drehachse D drehbar angeordnet und in axialer Richtung A klemmbar. Mittels einer drehmomentübertragenden, in Umfangsrichtung U der Kupplungsvorrichtung 1 einen begrenzten Relativweg zulassenden Anbindung 13 ist der Rampenring 10 an den Vortriebsring 9 angebunden. Die Steifigkeit der Anbindung 13 in Umfangsrichtung U ist richtungsabhängig.

Ferner weist die Verschleißnachstelleinrichtung 8 die Sensorfeder 16 auf, die ausgebildet ist, den Vortriebsring 9 im verschleißfreien und/oder verschleißnachgestellten Zustand der Kupplungsvorrichtung 1 in axialer Richtung A zu klemmen, wenn die Kupplungsvorrichtung 1 eingerückt ist. Hierzu kann die Sensorfeder 16 unmittelbar oder mittelbar, beispielsweise mittels eines, vorzugsweise zur Schwenklagerung 7 gehörigen, Drahtrings, an einer dem Vortriebsring 9 in axialer Richtung A gegenüberliegenden Oberfläche des Hebelelements 6 anliegen bzw. auf diese Oberfläche wirken. Die Anlage am bzw. die Wirkung auf das Hebelelement 6 erfolgt vorzugsweise im Wesentlichen auf demselben Radius wie die Anlage des Vortriebsrings 9 am Hebelelement 6. Ferner ist die Sensorfeder 16 in axialer Richtung A zwischen einer Innenseite des Kupplungsgehäuses 5 und der der Anpressplatte 2 bzw. der Kupplungsscheibe 4 abgewandten Oberfläche des Hebelelements 6 geklemmt und verspannt.

Das Hebelelement 6 ist ausgebildet, bei eingerückter Kupplungsvorrichtung 1 den Rampenring 10 in axialer Richtung A zwischen dem Hebelelement 6 und der Anpressplatte 2 zu klemmen. Die Sensorfeder 16 ist ausgebildet, das Hebelelement 6 im verschleißfreien und/oder verschleißnachgestellten Zustand der Kupplungsvorrichtung 1 gegen den Vortriebsring 9 zu drücken, um den Vortriebsring 9 in axialer Richtung A zu klemmen, wenn die Kupplungsvorrichtung 1 eingerückt ist. Ferner ist das Hebelelement 6 ausgebildet, die Sensorfeder 16 im verschleißbehafteten Zustand der Kupplungsvorrichtung 1 durchzudrücken, um die Klemmung des Vortriebsrings 9 in axialer Richtung A aufzuheben, wenn die Kupplungsvorrichtung 1 eingerückt ist.

Der Rampenring 10 weist Rampen 11 auf, die in Umfangsrichtung U der Kupplungsvorrichtung 1 nacheinander auf dem Rampenring 10 angeordnet sind und gleitbeweglich auf entsprechenden Gegenrampen 12 der Anpressplatte 2 gelagert sind. Vorzugsweise sind die Gegenrampen 12 in die Anpressplatte 2 eingelassen, können jedoch auch als separates Bauteil ausgebildet sein, das mit der Anpressplatte 2 verbunden ist. Durch die Verdrehung des Rampenrings 10 gleiten die Rampen 11 des Rampenrings 10 an den Gegenrampen 12 der Anpressplatte 2 hoch, wodurch sich der Abstand zwischen der Reibfläche der Anpressplatte 2, mit der die Anpressplatte 2 an der Kupplungsscheibe 4 zur Anlage kommt, und der der Anpressplatte 2 abgewandten Oberfläche des Rampenrings 10 vergrößert. Dies führt dazu, dass sich das Hebelelement 6 beim Einrücken der Kupplungsvorrichtung 1 weniger stark aufstellt und somit der Kupplungsverschleiß, insbesondere der Verschleiß der Kupplungsscheibe 4, nachgestellt werden kann.

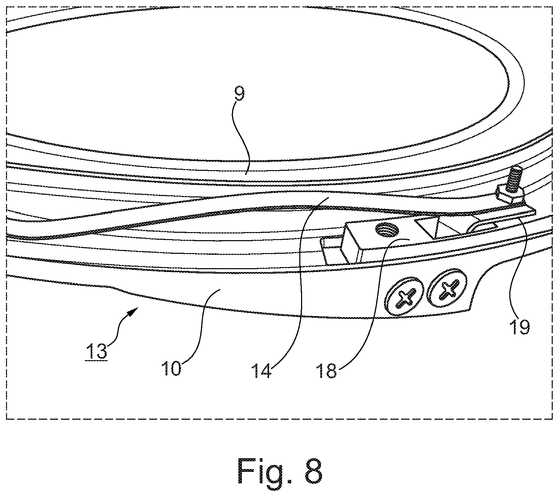

Die Anbindung 13 weist mehrere Beulfedern 14 auf, die sich in Umfangsrichtung U erstrecken und deren Steifigkeit in Druckrichtung geringer als in Zugrichtung ist. Dies führt dazu, dass sich die Beulfedern 14, wenn sie in Umfangsrichtung U auf Druck belastet werden, in axialer Richtung A ausbeulen, wie dies in Figur 8 dargestellt ist.

Insbesondere ist es von Vorteil, wenn die Beulfedern 14 bogenförmig, insbesondere als Kreisbogensegmente, ausgebildet sind und im Wesentlichen in radialer Richtung R zwischen dem Vortriebsring 9 auf der einen Seite und dem Rampenring 10 auf der anderen Seite verlaufen. Somit ist es insbesondere von Vorteil, wenn der Radius der Bogesegmente der Beulfedern 14 zwischen dem Radius des Vortriebsrings 9 und dem Radius des Rampenrings 10 liegt.

Jede der Beulfedern 14 ist an ihrem einen Ende jeweils durch eine erste Befestigung 17 am Vortriebsring 9 befestigt. Ferner ist jede der Beulfedern 14 an ihrem anderen Ende jeweils an einem Schiebeelement 15 befestigt. Anzumerken ist hierbei, dass die jeweilige Beulfeder 14 und das jeweilige Schiebeelement 15 auch als ein Bauteil ausgebildet sein können.

Jedes der Schiebeelemente 15 ist vorzugsweise im Wesentlichen S-förmig ausgebildet, wenn man es in radialer Richtung R der Kupplungsvorrichtung 1 betrachtet, und ist jeweils durch eine zweite Befestigung 18 am Rampenring 10 befestigt. Hierfür ist es insbesondere von Vorteil, wenn der Rampenring 10 in radialer Richtung R der Kupplungsvorrichtung 1 nach innen weisende Radialvorsprünge aufweist, an denen jeweils eines der Schiebeelemente 15 mit dem einen Ende der S-Form befestigt ist, während die Beulfeder 14 am anderen Ende der S-Form des Schiebeelements 15 befestigt ist.

Die vorgenannten Befestigungen erfolgen vorzugsweise mittels einer Schraub- oder Nietverbindung der Beulfeder 14 bzw. des Schiebeelements 15 am jeweiligen Bauteil, können beispielsweise jedoch auch durch Einhängen der Beulfeder 14 bzw. des Schiebeelements 15 am jeweiligen Bauteil erfolgen.

Zusätzlich zur Befestigung des Schiebeelements 15 am Rampenring 10, insbesondere an einem Radialvorsprung des Rampenrings 10, ist das Schiebeelement 15 in Umfangsrichtung U der Kupplungsvorrichtung 1 durch eine Führung 19 gleitbeweglich am Vortriebsring 9 gelagert. Die gleitbewegliche Lagerung des Schiebeelements 15 am Vortriebsring 9 erfolgt vorzugsweise an dem Ende der S-Form, an dem die Beulfeder 14 am Schiebeelement 15 befestigt ist. Beispielsweise kann die gleitbewegliche Lagerung des Schiebeelements 15 am Vortriebsring 9 durch ein im Vortriebsring 9 ausgebildetes Langloch und durch einen am Schiebeelement 15 ausgebildeten, im Wesentlichen T-förmigen Abschnitt erfolgen. Hierbei ist es insbesondere von Vorteil, wenn das Schiebeelement 15 sowohl in axialer Richtung A, als auch in radialer Richtung R der Kupplungsvorrichtung 1 verkippbar am Vortriebsring 9 gelagert ist, was gleichermaßen durch den T-förmigen Abschnitt erreicht werden kann.

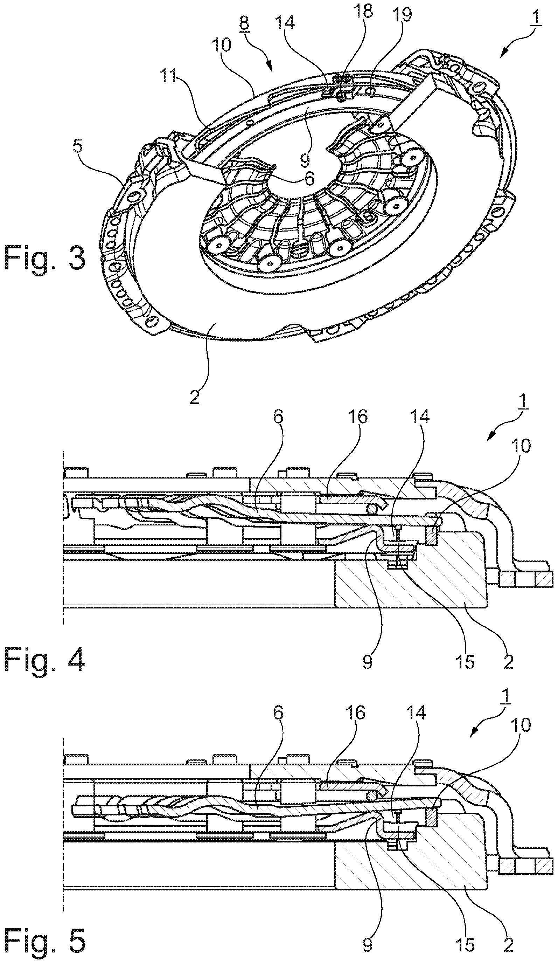

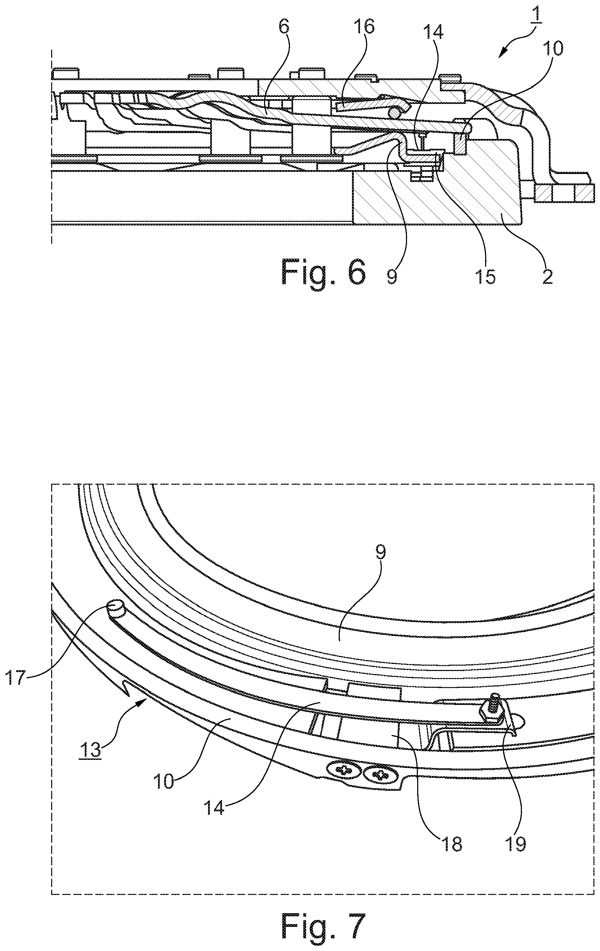

Nachfolgend wird die Funktion der Kupplungsvorrichtung 1 mit Bezug auf die Figuren 4 bis 6 erläutert. In den Figuren 4 und 5 ist die Kupplungsvorrichtung 1 im verschleißfreien Zustand bzw. in einem verschleißnachgestellten Zustand, das heißt nachdem sensierter Kupplungsverschleiß durch die Verschleißnachstelleinrichtung 8 vollständig nachgestellt worden ist, gezeigt. Zur Vereinfachung wird nachfolgend ausschließlich vom verschleißfreien Zustand gesprochen. In Figur 6 ist die Kupplungsvorrichtung 1 in einem verschleißbehaftetem Zustand gezeigt, das heißt in einem Zustand, in dem der Kupplungsverschleiß hinreichend groß ist und durch die Verschleißnachstelleinrichtung 8 sensiert und anschließend nachgestellt wird.

In Figur 4 ist die Kupplungsvorrichtung 1 im eingerückten Zustand gezeigt, wobei der Rampenring 10 durch das Hebelelement 6 geklemmt wird. Wenn die Kupplungsvorrichtung 1 verschleißfrei ist, wird ferner der Vortriebsring 9 durch die auf das Hebelelement 6 wirkende Sensorfeder 16 geklemmt, wobei die auf den Vortriebsring 9 wirkende Sensorfederkraft vergleichsweise gering ist. Die Beulfeder 14 wird beim Einrücken in axialer Richtung A der Kupplungsvorrichtung 1 ausgebeult, das heißt in Richtung ihrer geringen Steifigkeit verformt, und spannt den Vortriebsring 9 in Umfangsrichtung U der Kupplungsvorrichtung 1 vor. Ein Verdrehen des Vortriebsrings 9 erfolgt jedoch nicht, da die vergleichsweise geringe Sensorfederkraft ausreichend ist, um den Vortriebsring 9 in axialer Richtung Ader Kupplungsvorrichtung 1 zu klemmen.

Beim Ausrücken der Kupplungsvorrichtung 1 im verschleißfreien Zustand wird mit Bezug auf Figur 5 der Rampenring 10 in axialer Richtung A durch das Verkippen bzw. Umschnappen des Hebelelements 6 entlastet. Dabei ist im Abhub der Rampenring 10 nur noch mit der Kraft der nicht dargestellten, die Anpressplatte 2 in Ausrückrichtung vorspannenden, Blattfedern verspannt. Die Beulfeder 10 entspannt sich und geht in ihren flachen Zustand über, wobei der Rampenring 10 aufgrund der vergleichsweisen hohen Blattfederkraft immer in der Lage ist, die Kraft der zuvor ausgebeulten Beulfeder 14, das heißt die Kraft der in Richtung ihrer geringeren Steifigkeit belasteten Beulfeder 14, abzustützen.

Wenn die Kupplungsvorrichtung 1 anschließend wieder eingerückt wird und der Kupplungsverschleiß noch nicht hinreichend hoch ist, beginnt der Ablauf mit Bezug auf Figur 4 von vorne, wobei die Beulfeder 14 wieder ausgebeult wird.

In Figur 6 ist die Kupplungsvorrichtung 1 im eingerückten Zustand gezeigt, wenn noch nicht nachgestellter, hinreichender Kupplungsverschleiß vorliegt, das heißt wenn die Kupplungsvorrichtung 1 verschleißbehaftet ist.

Wie in Figur 4 wird auch in Figur 6 beim Einrücken der Kupplungsvorrichtung 1 die Beulfeder 14 ausgebeult, das heißt in axialer Richtung A der Kupplungsvorrichtung 1 bzw. in Richtung ihrer geringeren Steifigkeit verformt. Im verschleißbehafteten Zustand der Kupplungsvorrichtung 1 muss sich das Hebelelement 6 stärker aufstellen, damit die Anpressplatte 2 die dünner gewordene Kupplungsscheibe 4 zwischen Anpressplatte 2 und der Gegendruckplatte 3 klemmen kann, um den Reibschluss herstellen zu können. Die Sensorfeder 16 wird durch das sich stärker aufstellende Hebelelement 6 durchgedrückt und hebt die Klemmung des Vortriebsrings 9 auf, so dass das Hebelelement 6 sich nicht mehr mit dem Vortriebsring 9 in Anlage befindet, wie dies in Figur 6 dargestellt ist. Durch das Aufheben der Klemmung des Vortriebsrings 9 wird der Kupplungsverschleiß sensiert.

Die geringe Steifigkeit der ausgebeulten Beulfeder 14 reicht aus, um den in diesem Zustand klemmkraftfreien Vortriebsring 9 in Umfangsrichtung U der Kupplungsvorrichtung zu verdrehen, genauer gesagt in Umfangsrichtung U vorwärts zu drücken, wobei die Beulfeder 14 sich im eingerückten Zustand der Kupplungsvorrichtung 1 entspannt.

Beim Ausrücken der Kupplungsvorrichtung 1 wird der Vortriebsring 9 durch die Sensorfeder 16, genauer gesagt durch die auf das Hebelelement 6 wirkende Sensorfederkraft, in axialer Richtung A geklemmt, das heißt in Umfangsrichtung U festgehalten. Der Rampenring 10 wird beim Ausrücken der Kupplungsvorrichtung 1 in axialer Richtung A durch das Hebelelement 6 entlastet.

Die entspannte, in axialer Richtung A der Kupplungsvorrichtung 1 flache bzw. nicht mehr ausgebeulte Beulfeder 14 wird in Umfangsrichtung U der Kupplungsvorrichtung 1 in Richtung ihrer hohen Steifigkeit, das heißt in Zugrichtung, beansprucht. Dabei dient die Beulfeder 14 als Zuganker, um den Rampenring 10 in Nachstellrichtung zu verdrehen, das heißt vorwärts zu ziehen, wodurch die Rampen 11 des Rampenrings 10 an den anpressplattenseitigen Gegenrampen 12 hochgleiten. Durch das Hochgleiten vergrößert sich der Abstand zwischen der kupplungsscheibenseitigen Reibfläche der Anpressplatte 2 und der hebelelementseitigen Oberfläche des Rampenrings 10 beim Ausrücken der Kupplungsvorrichtung 1, wodurch der Kupplungsverschleiß nachgestellt wird.

Bei den nachfolgenden Einrückvorgängen sorgt der vergrößerte Abstand dafür, dass sich das Hebelelement 6 weniger stark als zuvor aufstellen muss, um die dünner gewordene Kupplungsscheibe 4 reibschlüssig zwischen der Anpressplatte 2 und der Gegendruckplatte 3 klemmen zu können. Wenn der Kupplungsverschleiß vollständig nachgestellt worden ist, beginnt beim anschließenden Einrückvorgang der Ablauf mit Bezug auf Figur 4. Wenn der Kupplungsverschleiß noch nicht vollständig nachgestellt worden ist, beginnt beim anschließenden Einrücken der Ablauf mit Bezug auf Figur 6 so lange, bis der zu sensierende Kupplungsverschleiß unter die Sensierschwelle der Sensorfeder 16 fällt. Dann beginnt beim anschließenden Einrückvorgang der Ablauf wie zuvor beschrieben mit Bezug auf Figur 4.

Die vorangegangenen Ausführungsbeispiele betreffen eine Kupplungsvorrichtung 1, insbesondere eine Einzel- oder Doppelkupplung, mit zumindest einer Gegendruckplatte 3, einer bezüglich der Gegendruckplatte 3 in axialer Richtung A der Kupplungsvorrichtung 1 begrenzt verlagerbaren Anpressplatte 2 zur reibschlüssigen Klemmung einer Kupplungsscheibe 4 zwischen der Gegendruckplatte 3 und der Anpressplatte 2, und einer Verschleißnachstelleinrichtung 8 zum Ausgleich von Verschleiß der Kupplungsscheibe 4, wobei die Verschleißnachstelleinrichtung 8 zumindest einen drehbaren und in axialer Richtung A klemmbaren Vortriebsring 9 und zumindest einen drehbaren und in axialer Richtung A klemmbaren Rampenring 10 aufweist, der mittels einer drehmomentübertragenden, in Umfangsrichtung U der Kupplungsvorrichtung 1 einen begrenzten Relativweg zulassenden Anbindung 13 an den Vortriebsring 9 angebunden ist, wobei die Steifigkeit der Anbindung 13 in Umfangsrichtung U richtungsabhängig ist.

### Bezugszeichenliste

- 1: Kupplungsvorrichtung
- 2: Anpressplatte
- 3: Gegendruckplatte
- 4: Kupplungsscheibe
- 5: Kupplungsgehäuse
- 6: Hebelelement
- 7: Schwenklagerung
- 8: Verschleißnachstelleinrichtung
- 9: Vortriebsring
- 10: Rampenring
- 11: Rampe
- 12: Gegenrampe
- 13: Anbindung
- 14: Beulfeder
- 15: Schiebeelement
- 16: Sensorfeder
- 17: erste Befestigung
- 18: zweite Befestigung
- 19: Führung
- A: axiale Richtung
- D: Drehachse
- R: radiale Richtung
- U: Umfangsrichtung

## Patentansprüche

1. Kupplungsvorrichtung (1), insbesondere Einzel- oder Doppelkupplung, mit zumindest einer Gegendruckplatte (3), einer bezüglich der Gegendruckplatte (3) in axialer Richtung (A) der Kupplungsvorrichtung (1) begrenzt verlagerbaren Anpressplatte (2) zur reibschlüssigen Klemmung einer Kupplungsscheibe (4) zwischen der Gegendruckplatte (3) und der Anpressplatte (2), und einer Verschleißnachstelleinrichtung (8) zum Ausgleich von Verschleiß der Kupplungsscheibe (4), wobei die Verschleißnachstelleinrichtung (8) zumindest einen drehbaren und in axialer Richtung (A) klemmbaren Vortriebsring (9) und zumindest einen drehbaren und in axialer Richtung (A) klemmbaren Rampenring (10) aufweist, **dadurch gekennzeichnet, dass** der Rampenring mittels einer drehmomentübertragenden, in Umfangsrichtung (U) der Kupplungsvorrichtung (1) einen begrenzten Relativweg zulassenden Anbindung (13) an den Vortriebsring (9) angebunden ist, wobei die Steifigkeit der Anbindung (13) in Umfangsrichtung (U) richtungsabhängig ist.

2. Kupplungsvorrichtung (1) nach Anspruch 1, wobei die Verschleißnachstelleinrichtung (8) eine Sensorfeder (16) aufweist, die ausgebildet ist, den Vortriebsring (9) im verschleißfreien und/oder verschleißnachgestellten Zustand der Kupplungsvorrichtung (1) in axialer Richtung (A) zu klemmen, wenn die Kupplungsvorrichtung (1) eingerückt ist.

3. Kupplungsvorrichtung (1) nach Anspruch 1 oder 2, wobei ein Hebelelement (6) vorgesehen ist, das ausgebildet ist, bei eingerückter Kupplungsvorrichtung (1) den Rampenring (10) in axialer Richtung (A) zwischen dem Hebelelement (6) und der Anpressplatte (2) zu klemmen.

4. Kupplungsvorrichtung (1) nach Anspruch 3, wobei die Sensorfeder (16) ausgebildet ist, das Hebelelement (6) im verschleißfreien und/oder verschleißnachgestellten Zustand der Kupplungsvorrichtung (1) gegen den Vortriebsring (9) zu drücken, um den Vortriebsring (9) in axialer Richtung (A) zu klemmen, wenn die Kupplungsvorrichtung (1) eingerückt ist.

5. Kupplungsvorrichtung (1) nach Anspruch 3 oder 4, wobei das Hebelelement (6) ausgebildet ist, die Sensorfeder (16) im verschleißbehafteten Zustand der Kupplungsvorrichtung (1) durchzudrücken, um die Klemmung des Vortriebsrings (9) in axialer Richtung (A) aufzuheben, wenn die Kupplungsvorrichtung (1) eingerückt ist.

6. Kupplungsvorrichtung (1) nach zumindest einem der Ansprüche 1 bis 5, wobei die Anbindung (13) eine Beulfeder (14) aufweist, die sich in Umfangsrichtung (U) erstreckt, und deren Steifigkeit vorzugsweise in Druckrichtung geringer als in Zugrichtung ist.

7. Kupplungsvorrichtung (1) nach Anspruch 6, wobei die Beulfeder (14) bogenförmig ausgebildet ist.

8. Kupplungsvorrichtung (1) nach Anspruch 6 oder 7, wobei die Beulfeder (14) an ihrem einen Ende an einem der beiden Ringe (9, 10), vorzugsweise am Vortriebsring (9), befestigt ist.

9. Kupplungsvorrichtung (1) nach zumindest einem der Ansprüche 6 bis 8, wobei die Beulfeder (14) an ihrem anderen Ende an einem Schiebeelement (15) befestigt ist, das am anderen der beiden Ringe (9, 10), vorzugsweise am Rampenring (10), befestigt ist.

10. Kupplungsvorrichtung (1) nach Anspruch 9, wobei das Schiebeelement (15) in Umfangsrichtung (U) gleitbeweglich und sowohl in axialer Richtung (A) als auch in radialer Richtung (R) der Kupplungsvorrichtung (1) verkippbar an dem einen der beiden Ringe (9, 10), vorzugsweise am Vortriebsring (9), gelagert ist.

## Claims

1. A clutch device (1), in particular a single or double clutch, having at least one counter-pressure plate (3), a pressure plate (2), which is displaceable in a limited manner relative to the counter-pressure plate (3) in the axial direction (A) of the clutch device (1), for frictionally engaged clamping of a clutch plate (4) between the counter-pressure plate (3) and the pressure plate (2), and a wear-adjustment device (8) for compensating for wear on the clutch plate (4), wherein the wear adjustment-device (8) has at least one rotatable drive ring (9) which is clampable in the axial direction (A) and at least one rotatable ramp ring (10) which is clampable in an axial direction (A), **characterised in that** the ramp ring is connected to the drive ring (9) by means of a torque-transferring connection (13) allowing a limited relative path in the circumferential direction (U) of the clutch device (1), wherein the rigidity of the connection (13) in the circumferential direction (U) is directionally dependent.

2. The clutch device (1) according to claim 1, wherein the wear-adjustment device (8) has a sensor spring (16) which is designed to clamp the drive ring (9) in the wear-free and/or wear-adjusted state of the clutch device (1) in the axial direction (A) when the clutch device (1) is engaged.

3. The clutch device (1) according to claim 1 or 2, wherein a lever element (6) is provided which is designed to clamp the ramp ring (10) in the axial direction (A) between the lever element (6) and the pressure plate (2) when the clutch device (1) is engaged.

4. The clutch device (1) according to claim 3, wherein the sensor spring (16) is designed to press the lever element (6) in the wear-free and/or wear-adjusted state of the clutch device (1) against the drive ring (9) in order to move the drive ring (9) in the axial direction (A) when the clutch device (1) is engaged.

5. The clutch device (1) according to claim 3 or 4, wherein the lever element (6) is designed to push through the sensor spring (16) when the clutch device (1) is subject to wear in order to release the clamping of the drive ring (9) in the axial direction (A) when the clutch device (1) is engaged.

6. The clutch device (1) according to at least one of claims 1 to 5, wherein the connection (13) has a buckling spring (14) which extends in the circumferential direction (U) and the rigidity of which is preferably less in the compression direction than in the tensile direction.

7. The clutch device (1) according to claim 6, wherein the buckling spring (14) is arcuate.

8. The clutch device (1) according to claim 6 or 7, wherein the buckling spring (14) is fastened at one end to one of the two rings (9, 10), preferably to the drive ring (9).

9. The clutch device (1) according to at least one of claims 6 to 8, wherein the buckling spring (14) is attached at its other end to a sliding element (15) which is attached to the other of the two rings (9, 10), preferably to the ramp ring (10).

10. The clutch device (1) according to claim 9, wherein the sliding element (15) is mounted on one of the two rings (9, 10), preferably on the drive ring (9), so as to be slidable in the circumferential direction (U) and tiltable both in the axial direction (A) and in the radial direction (R) of the clutch device (1).

## Revendications

1. Système d'embrayage (1), en particulier embrayage simple ou double, comprenant au moins un plateau de contre-pression (3), un plateau de pression (2), pouvant se déplacer de manière limitée dans la direction axiale (A) du système d'embrayage (1) par rapport au plateau de contre-pression (3), pour le serrage par friction d'un disque d'embrayage (4) entre le plateau de contre-pression (3) et le plateau de pression (2) et un dispositif de rattrapage d'usure (8) servant à compenser l'usure du disque d'embrayage (4), le dispositif de rattrapage d'usure (8) comportant au moins une bague de traction (9) rotative et pouvant être serrée dans la direction axiale (A) et au moins une bague à rampe (10) rotative et pouvant être serrée dans la direction axiale (A), **caractérisé en ce que** la bague à rampe est reliée à la bague de traction (9) au moyen d'une liaison (13) transmettant un couple et autorisant une course relative limitée dans la direction périphérique (U) du système d'embrayage (1), la rigidité de la liaison (13) dans la direction périphérique (U) étant fonction de la direction.

2. Système d'embrayage (1) selon la revendication 1, dans lequel le dispositif de rattrapage d'usure (8) comporte un ressort de capteur (16) qui est conçu pour serrer la bague de traction (9) dans l'état sans usure et/ou rattrapé en usure du système d'embrayage (1) dans la direction axiale (A) lorsque le système d'embrayage (1) est en prise.

3. Système d'embrayage (1) selon la revendication 1 ou 2, dans lequel un élément de levier (6) est prévu, qui est conçu, lorsque le système d'embrayage (1) est en prise, pour serrer la bague à rampe (10) dans la direction axiale (A) entre l'élément de levier (6) et la plaque de pression (2).

4. Système d'embrayage (1) selon la revendication 3, dans lequel le ressort de capteur (16) est conçu pour presser l'élément de levier (6) dans l'état sans usure et/ou rattrapé en l'usure du système d'embrayage (1) contre la bague de traction (9) afin de serrer la bague de traction (9) dans la direction axiale (A) lorsque le système d'embrayage (1) est en prise.

5. Système d'embrayage (1) selon la revendication 3 ou 4, dans lequel l'élément de levier (6) est conçu pour enfoncer le ressort de capteur (16) lorsque le système d'embrayage (1) est soumis à une usure afin de libérer le serrage de la bague de traction (9) dans la direction axiale (A), lorsque le système d'embrayage (1) est en prise.

6. Système d'embrayage (1) selon au moins l'une des revendications 1 à 5, dans lequel la liaison (13) présente un ressort de déformation (14), qui s'étend dans la direction périphérique (U) et dont la rigidité est de préférence moindre dans la direction de compression que dans la direction de traction.

7. Système d'embrayage (1) selon la revendication 6, dans lequel le ressort de déformation (14) est arqué.

8. Système d'embrayage (1) selon la revendication 6 ou 7, dans lequel le ressort de déformation (14) est attaché à une de ses extrémités à l'une des deux bagues (9, 10), de préférence à la bague de traction (9).

9. Système d'embrayage (1) selon au moins l'une des revendications 6 à 8, dans lequel le ressort de déformation (14) est fixé à son autre extrémité à un élément coulissant (15) qui est fixé à l'autre des deux bagues (9, 10), de préférence à la bague à rampe (10).

10. Système d'embrayage (1) selon la revendication 9, dans lequel l'élément coulissant (15) peut coulisser dans la direction périphérique (U) et basculer sur l'une des deux bagues (9, 10) à la fois dans la direction axiale (A) et dans la direction radiale (R) du système d'embrayage (1) de préférence sur la bague de traction (9).
